# EUROPEAN PATENT APPLICATION

(11) **EP 2 053 288 A2**
(43) Date of publication of application: **29.04.2009**
(21) Application number: 08018451.8
(22) Date of filing: 22.10.2008
(51) Int. Cl.: F16J 15/32

(54) **Oil seals**

(30) Priority: 22.10.2007 JP 2007274001
(71) Applicant: Carl Freudenberg KG, 69469 Weinheim (DE)
(72) Inventor: Oizumi, Masaka, Fukushima-shi Fukushima 960-1193 (JP); Sato, Masaki, Fukushima-shi Fukushima 960-1193 (JP); Noji, Toshiaki, Fukushima-shi Fukushima 960-1193 (JP)

(57) **Abstract**

The invention prevents a crack from being generated in a seal lip (13) by reducing a mold releasing resistance generated by a holder portion (16) when releasing the mold after molding, while securing a falling preventing function of a garter spring (15) by the holder portion (16) formed in the seal lip (13). A plurality of holder portions (16) pressing the garter spring (15) are formed at a predetermined interval in a circumferential direction in an outer peripheral surface of the seal lip (13) so as to be positioned in a leading end side than a groove (13b) to which the garter spring (15) is fitted and attached, and are formed such that a width wₒ in the circumferential direction in an outer diameter side in each of the holder portions (16) becomes equal to or less than a width wᵢ in the circumferential direction in an inner diameter side. In this way, the holder portion (16) can easily undergo bending deformation, and each of the holder portions (16) does not come to a biting state with an inner surface of the metal mold when molding the oil seal (1). Since each of the holder portions (16) is easily released from the inner surface of the metal mold while undergoing bending deformation, in a mold releasing process after molding, a mold releasing resistance is significantly reduced.

## Description

### BACKGROUND OF THE INVENTION

### Field of the Invention

The present invention relates to an oil seal used for sealing an outer periphery of a rotating body in a motor vehicle, a general machine, an industrial machine or the like, and more particularly to an oil seal provided with a garter spring compensating for a tensioning force of a seal lip.

### Description of the Related Art

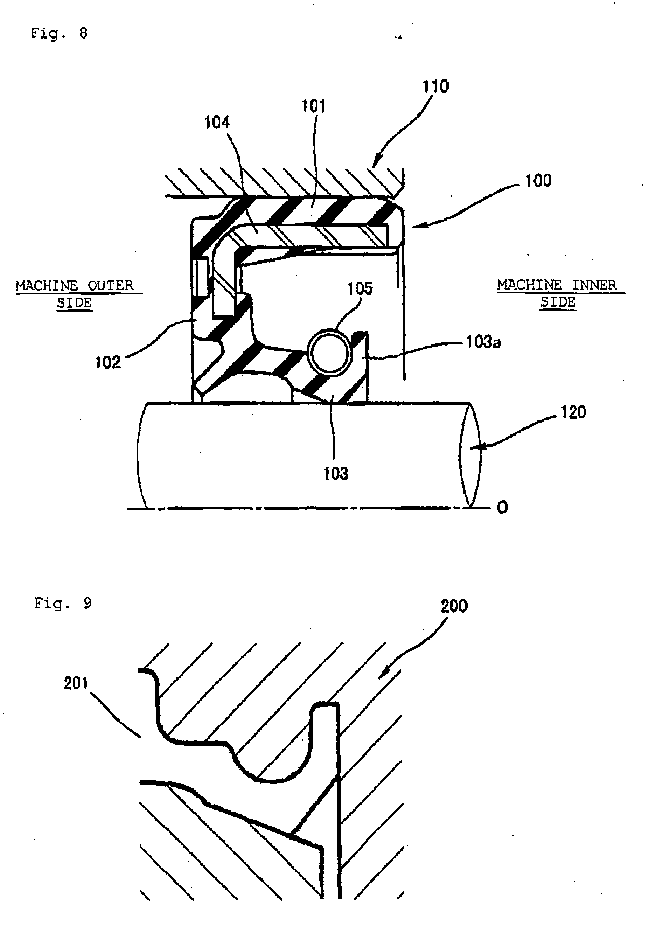

Fig. 8 is a half cross sectional view showing an oil seal 100 in accordance with a related art by cutting a plane passing through an axis O thereof. This kind of oil seal 100 is formed as an annular shape with a rubber-like elastic material, as shown in Fig. 8, and is structured such that a press-in fixed portion 101 in an outer periphery and a seal lip 103 in an inner peripheral side thereof are continuously formed with each other via an intermediate portion 102, and a metal ring 104 for reinforcing is integrally embedded from the press-in fixed portion 101 to the intermediate portion 102. Further, an outer periphery of the seal lip 103 is formed as a groove shape which is continuous in a circumferential direction, and a garter spring 105 for compensating for a tensioning force of the seal lip 103 is fitted and attached thereto.

Further, the press-in fixed portion 101 is closely fitted to an inner peripheral surface of a shaft hole housing 110 of a device, and a leading end inner peripheral portion of the seal lip 103 is slidably brought into close contact with an outer peripheral surface of a rotating shaft 120 inserted to the shaft hole housing 110, whereby the oil seal 100 serves as a shaft sealing function, and prevents a sealed fluid (an oil) within the machine from leaking from a shaft periphery to an atmospheric air side in an outer side of the machine (refer to, for example, Japanese Unexamined Patent Publication No. 2003-336745).

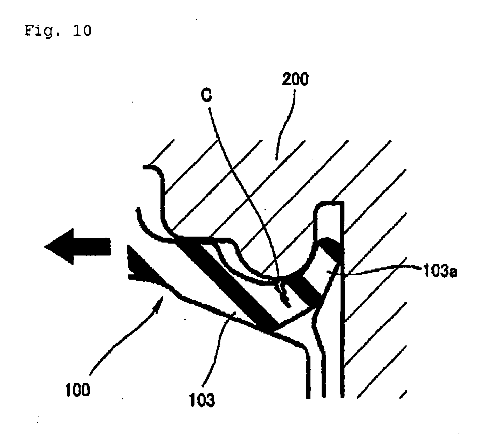

Fig. 9 is a cross sectional view showing a part of a metal mold 200 used for molding the oil seal 100 in Fig. 8, and Fig. 10 is a cross sectional view showing a mold releasing process after molding. In other words, the oil seal 100 shown in Fig. 8 is molded by filling a molding rubber material so as to crosslink and harden after setting the metal ring 104 (not shown in Fig. 9) in advance within a cavity 201 of the metal mold 200 as shown in Fig. 9.

However, since a holder portion 103a rises up in an outer diameter direction for pressing the garter spring 105, in a leading end portion of the seal lip 103 shown in Fig. 8, is formed as an undercut shape at a time of releasing the molded oil seal 100 from the metal mold 200 in an axial direction as shown in Fig. 10, there is a risk that a crack C is generated by a constrainedly pulling.

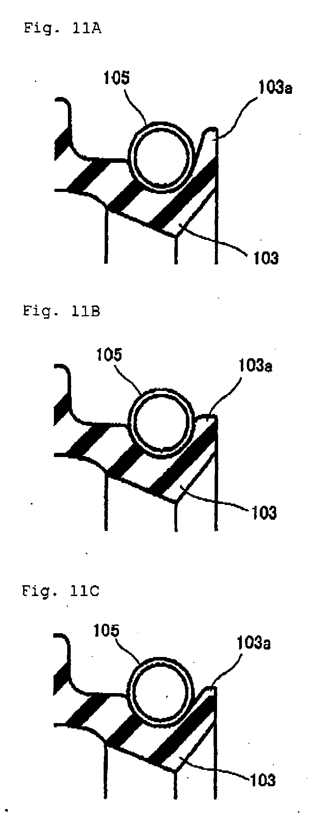

Figs. 11A to 11C show conventional countermeasure examples for preventing the crack from being generated in the mold releasing process as mentioned above, in which Fig. 11A shows an example in which an inner side surface of the holder 103a is formed as a tapered shape, Fig. 11B shows an example in which a height of the holder portion 103a is made low, and Fig. 11C shows an example in which the height of the holder portion 103a is made low and an inner side surface thereof is formed as a tapered shape. Since a resistance at a time of releasing the mold is reduced by employing these examples, they are effective for preventing the crack from being generated. However, all the examples in Fig. 11 have a problem that the garter spring 105 tends to fall away.

### SUMMARY OF THE INVENTION

The present invention is made by taking the points mentioned above into consideration, and a technical object of the present invention is to prevent a crack from being generated by reducing a mold releasing resistance generated by a holder portion at a time of releasing the mold after molding, while securing a falling preventing function of a garter spring by the holder portion formed in a seal lip.

As a means for effectively achieving the technical object mentioned above, in accordance with a first aspect of the present invention, there is provided an oil seal, wherein a groove capable of fitting and attaching a garter spring is formed continuously in a circumferential direction, and a plurality of holder portions pressing the garter spring are formed at a predetermined interval in the circumferential direction so as to be positioned in a leading end side of the seal lip than the groove, and are formed such that a width in the circumferential direction in an outer diameter side in each of the holder portions becomes equal to or less than a width in the circumferential direction in an inner diameter side. In accordance with this structure, since the holder portion pressing the garter spring is formed so as to be separated into a plurality of holder portions in the circumferential direction, it is possible to easily undergo bending deformation. Further, since the width in the circumferential direction in the outer diameter side in each of the holder portions becomes equal to or less than the width in the circumferential direction in the inner diameter side, each of the holder portions does not come to a biting state with the inner surface of the metal mold. Accordingly, since each of the holder portions easily breaks away from the inner surface of the metal mold while undergoing bending deformation, in the mold releasing process after molding the oil seal, a mold releasing resistance is significantly reduced. Further, since the holder portion is formed separately in the circumferential direction, whereby a flexibility of a leading end of the seal lip is improved, it is possible to reduce a strain to the outer peripheral side of the seal lip at a time of inserting the other shaft.

Further, the oil seal in accordance with a second aspect of the present invention is structured such as to satisfy a relation r ≤ R ≤ rs in which a radius of a deepest portion of the groove to which the garter spring is fitted and attached is set to r, a radius of a relative concave portion between the holder portions is set to R, and a radius of a coil center of the garter spring fitted and attached to the groove is set to rs, in the structure described in the first aspect. This is because each of the holder portions does not easily undergo bending deformation in the mold releasing process after molding if the concave portion is shallower than the coil center of the garter spring, and an original function of the holder portion pressing the garter spring is deteriorated if the concave portion is deeper than the deepest portion of the groove.

In accordance with the oil seal of the present invention, since it is not necessary to reduce the height of the holder portion of the seal lip for reducing the mold releasing resistance after molding, it is possible to secure the falling preventing function of the garter spring by the holder portion. Further, since each of the holder portions is easily released from the inner surface of the metal mold while undergoing bending deformation, at a time of the mold releasing after molding, whereby the mold releasing resistance is significantly reduced, it is possible to prevent the crack from being generated due to the constrainedly pulling. Further, since the flexibility of the leading end of the seal lip is improved, the resistance at a time of inserting the shaft is reduced, and it is possible to contribute to lowering the sliding torque at a time of use.

### BRIEF DESCRIPTION OF THE DRAWINGS

Fig. 1 is a half cross sectional view showing a preferable embodiment of an oil seal in accordance with the present invention by cutting along a plane passing through an axis O thereof;
Fig. 2 is a view of an example of a shape of a holder portion in the present invention as seen from a direction A in Fig. 1;
Fig. 3 is a view of an other example of the shape of the holder portion in the present invention as seen from the direction A in Fig. 1;
Fig. 4 is a view of an other example of the shape of the holder portion in the present invention as seen from the direction A in Fig. 1;
Fig. 5 is a view of an other example of the shape of the holder portion in the present invention as seen from the direction A in Fig. 1;
Fig. 6 is an enlarged view of a substantial part in Fig. 1;
Fig. 7 is a cross sectional view showing a part of a metal mold used for molding the oil seal in Fig. 1;
Fig. 8 is a half cross sectional view showing an oil seal in accordance with a related art by cutting along a plane passing through an axis O thereof;
Fig. 9 is a cross sectional view showing a part of a metal mold used for molding the oil seal in Fig. 8;
Fig. 10 is a cross sectional view showing a mold releasing process after molding by the metal mold in Fig. 9; and
Fig. 11 is an explanatory view showing a conventional countermeasure example for preventing a crack from being generated in the mold releasing process.

### DETAILED DESCRIPTION OF THE PREFERRED EMBODIMENTS

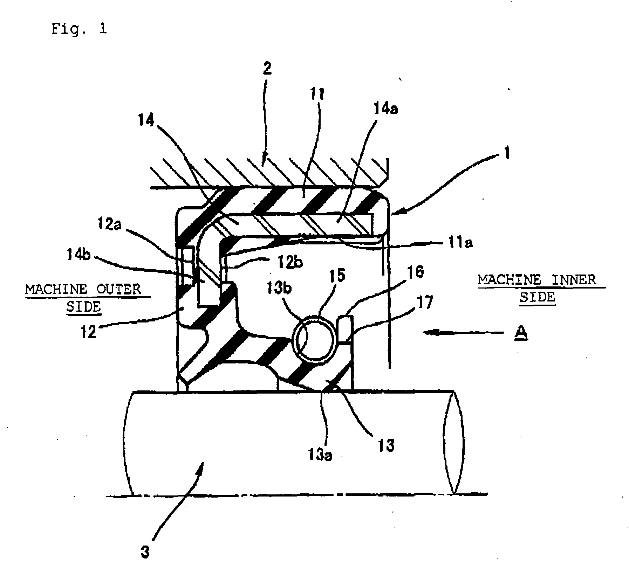

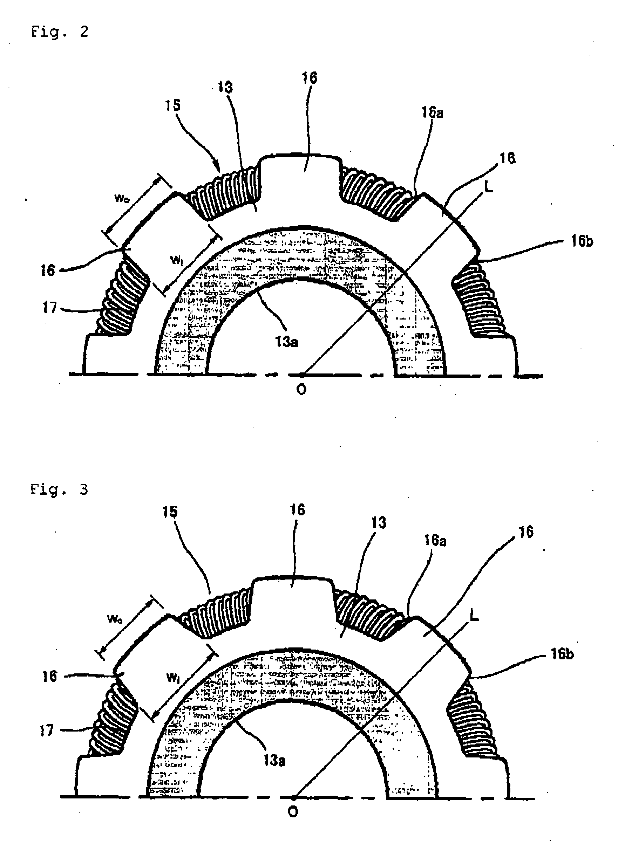

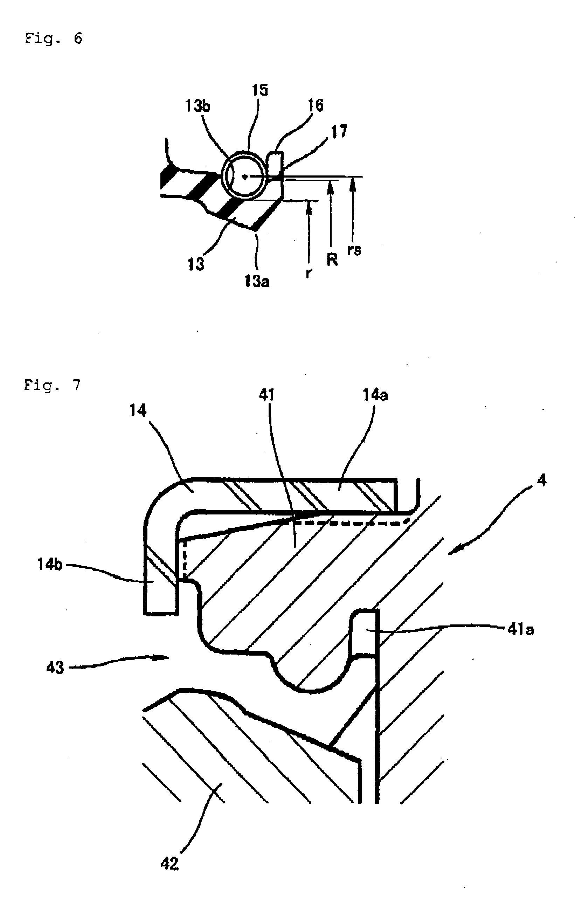

Descriptions will be given below of an oil seal according to the present invention with reference to the accompanying drawings. Fig. 1 is a half cross sectional view showing a preferable embodiment of the oil seal in accordance with the present invention by cutting along a plane passing through an axis O thereof, Figs. 2 to 5 are views of examples of a shape of a holder portion in the present invention as seen from a direction A in Fig. 1, and Fig. 6 is an enlarged view of a substantial part in Fig. 1.

An oil seal 1 shown in Fig. 1 is provided between a shaft hole housing 2 of a device, and a rotating shaft 3 concentrically and rotatably inserted to an inner periphery thereof, and is integrally molded by a rubber-like elastic material in a metal ring 14. Specifically, the oil seal 1 has an approximately cylindrical press-in fixed portion 11, an intermediate portion 12 extending from an end portion forming a machine outer side thereof to an inner peripheral side, a seal lip 13 extending toward a machine inner side in such a manner as to form an approximately C-shaped cross section together with the press-in fixed portion 11 and the intermediate portion 12 from an inner peripheral end of the intermediate portion 12, the reinforcing metal ring 14 embedded astride the press-in fixed portion 11 and the intermediate portion 12, and a garter spring 15 fitted and attached to an outer periphery of the seal lip 13.

The metal ring 14 is formed as an approximately L-shaped cross sectional bent shape including a cylinder portion 14a embedded in the press-in fixed portion 11 and a flange portion 14b embedded in the intermediate portion 12. The press-in fixed portion 11 is a portion which is pressed into and closely fitted to an inner peripheral surface of the shaft hole housing 2, and is structured such that a suitable crush-out is given in a diametrical direction between the cylindrical portion 14a of the metal ring 14 and the inner peripheral surface of the shaft hole housing 2, in an installed state. In this case, a notch 11a formed in the inner peripheral portion of the press-in fixed portion 11, and notches 12a and 12b formed in the intermediate portion 12 so as to be positioned in both surfaces of the flange portion 14b of the metal ring 14 are molded traces formed by a convex portion or the like for positioning and fixing the metal ring 14 within the metal mold mentioned below, at a time of molding the oil seal 1.

The seal lip 13 is structured such that a lip edge 13a formed as an approximately V-shaped cross section is formed in an inner periphery in the vicinity of a leading end directed to the machine inner side, and the lip edge 13a is slidably brought into close contact with an outer peripheral surface of the rotating shaft 3 with a suitable fastening margin.

A groove 13b formed as a semicircular cross sectional shape is formed in an outer periphery of the seal lip 13 continuously in a circumferential direction so as to be positioned in an outer peripheral side of the lip edge 13a, and the garter spring 15 is fitted and attached to the groove 13b. The garter spring 15 is structured by connecting metal coil springs in a ring shape, and compensates for a tensioning force of the seal lip 13 with respect to the rotating shaft 3.

A plurality of holder portions 16 pressing the garter spring 15 are formed in an outer periphery of the leading end portion of the seal lip 13, that is, the outer periphery in the leading end side of the seal lip 13 than the groove 13b to which the garter spring 15 is fitted and attached, so as to be spaced at a predetermined interval in a circumferential direction.

In an example shown in Fig. 2, each of the holder portions 16 is structured such that both side surfaces 16a and 16b in the circumferential direction are in parallel with respect to a line L in a radial direction connecting an intermediate in the circumferential direction of the holder portion 16 and an axis O, and a width wₒ in the circumferential direction in an outer diameter side is accordingly equal to a width w_{I} in the circumferential direction in an inner diameter side.

In an example shown in Fig. 3, each of the holder portions 16 is structured such that both the side surfaces 16a and 16b in the circumferential direction are line symmetrical with each other with respect to line L in the radial direction connecting the intermediate in the circumferential direction of the holder portion 16 and the axis O, and the width wₒ in the circumferential direction in the outer diameter side is smaller than the width wᵢ in the circumferential direction in the inner diameter side.

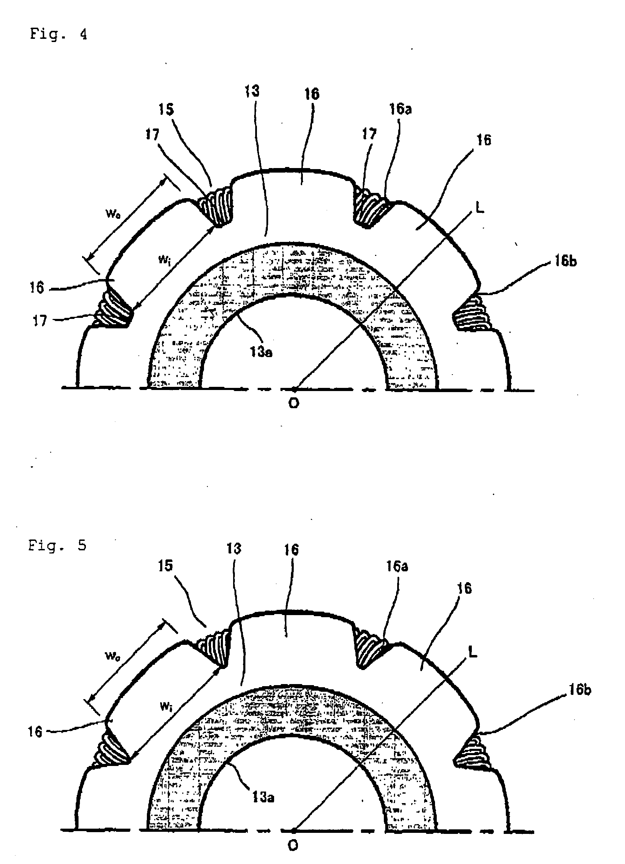

In an example shown in Fig. 4, each of the holder portions 16 is structured such that both the side surfaces 16a and 16b in the circumferential direction are in parallel with respect to line L in the radial direction connecting the intermediate in the circumferential direction of the holder portion 16 and the axis O, the width wₒ in the circumferential direction in the outer diameter side is accordingly equal to the width wᵢ in the circumferential direction in the inner diameter side, and the widths wₒ and wᵢ in the circumferential direction are larger than the example shown in Fig. 2 (the width in the circumferential direction of the relative concave portion 17 between the holder portions 16 and 16 is small).

In an example shown in Fig. 5, each of the holder portions 16 is structured such that both the side surfaces 16a and 16b in the circumferential direction are line symmetrical with each other with respect to line L in the radial direction connecting the intermediate in the circumferential direction of the holder portion 16 and the axis O, the width wₒ in the circumferential direction in the outer diameter side is smaller than the width wᵢ in the circumferential direction in the inner diameter side, and the widths wₒ and wᵢ in the circumferential direction are larger than the example shown in Fig. 3 (the width in the circumferential direction of the relative concave portion between the holder portions 16 and 16 is small).

Further, as shown in Fig. 6, a relation r ≤ R ≤ rs is established, by setting a radius of the deepest portion of the groove 13b to which the garter spring 15 is fitted and attached to r, a radius of the relative concave portion 17 between the holder portions 16 and 16 to R, and a radius of a coil center of the garter spring 15 fitted and attached to the groove 13b to rs. The relation R ≤ rs is set because each of the holder portions 16 does not easily undergo bending deformation in the mold releasing process after molding if the concave portion 17 is shallower than the coil center of the garter spring 15, and the relation r ≤ R is set because the original function of the holder portion 16 pressing the garter spring 15 is deteriorated if the concave portion 17 is deeper than the deepest portion of the groove 13b.

Fig. 7 is a cross sectional view showing a part of a metal mold used for molding the oil seal 1 in Fig. 1. Specifically, a metal mold 4 shown in Fig. 7 includes split dies 41 and 42, and the oil seal 1 in Fig. 1 is formed integrally with the metal ring 14 by setting the metal ring 14 to which a vulcanization adhesive agent is applied in an inner surface of one split mold 41 so as to clamp the mold, and filling an unvulcanized molding rubber material within a cavity 43 defined between the split molds 41 and 42 and the metal ring 14 thereby so as to crosslink and harden.

After molding, a molded product (the oil seal 1) attached to the split mold 41 in a fitted state is released after opening the split molds 41 and 42. Further, since the holder portion 16 in the leading end side outer periphery of the seal lip 13 is formed as a plural divided shape with respect to the circumferential direction, the molded product can easily undergo bending deformation. Further, since the width wₒ in the circumferential direction in the outer diameter side becomes equal to or less than the width wᵢ in the circumferential direction in the inner diameter side, in the holder portion 16, each of the holder portions 16 and each of the diametrical concave portions 41 a of the split mold 41 which is a forming surface corresponding thereto do not come to a biting state. Accordingly, since each of the holder portions 16 is pursed in the inner diameter side within each of the diametrical concave portions 41a and is easily released from the inner surface of the split mold 41 while undergoing bending deformation, in the process of releasing the molded product (the oil seal 1) in the axial direction, the mold releasing resistance is significantly reduced, and it is possible to prevent the crack from being generated in the seal lip 13 due to the constrainedly pulling.

Further, since it is not accordingly necessary to reduce the height of the holder portion 16 for the purpose of reducing the mold releasing resistance after molding, it is possible to secure the falling preventing function of the garter spring 15 by the holder portion 16.

Further, in accordance with the illustrated embodiment, since the holder portion 16 is formed so as to be separated into a plurality of holder portions in the circumferential direction, a flexibility of the leading end of the seal lip 13 is improved. As a result, it is possible to reduce the resistance at a time of inserting the rotating shaft 3 to the inner periphery of the seal lip 13 so as to install, and it is possible to intend to reduce the sliding torque between the seal lip 13 and the rotating shaft 3 in the used state shown in Fig. 1.

## Claims

1. An oil seal (1), wherein a groove (13b) fitting and attaching a garter spring (15) is formed continuously in a circumferential direction, and a plurality of holder portions (16) pressing the garter spring (15) are formed at a predetermined interval in the circumferential direction so as to be positioned in a leading end side of the seal lip (13) than the groove, and are formed such that a width wₒ in the circumferential direction in an outer diameter side in each of the holder portions (16) becomes equal to or less than a width wᵢ in the circumferential direction in an inner diameter side.

2. An oil seal as claimed in claim 1, wherein a relation r ≤ R ≤ rs is satisfied, by setting a radius of a deepest portion of the groove (13b) to which the garter spring (15) is fitted and attached to r, a radius of a relative concave portion (17) between the holder portions (16) to R, and a radius of a coil center of the garter spring (15) fitted and attached to the groove (13b) to rs.
